(19) Europäisches Patentamt European Patent Office Office européen des brevets

(11) **EP 1 831 009 B1**

(12) **EUROPÄISCHE PATENTSCHRIFT**

(45) Veröffentlichungstag und Bekanntmachung des Hinweises auf die Patenterteilung:
**27.05.2009 Patentblatt 2009/22**

(21) Anmeldenummer: **05824387.4**

(22) Anmeldetag: **21.12.2005**

(51) Int Cl.:
*B32B 3/28* (2006.01)   *B29C 51/00* (2006.01)
*B29C 70/22* (2006.01)   *B29D 24/00* (2006.01)
*E04C 2/32* (2006.01)

(86) Internationale Anmeldenummer:
**PCT/EP2005/013800**

(87) Internationale Veröffentlichungsnummer:
**WO 2006/069707 (06.07.2006 Gazette 2006/27)**

(54) **BAUELEMENT, INSBESONDERE ZUR WANDVERKLEIDUNG, UND VERFAHREN ZU DESSEN HERSTELLUNG**

BUILDING PANEL IN PARTICULAR FOR WALL COVERING AND METHOD FOR THE PRODUCTION THEREOF

ELEMENT DE CONSTRUCTION, NOTAMMENT POUR REVETEMENT MURAL, ET SON PROCEDE DE PRODUCTION

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **23.12.2004 DE 102004062264**

(43) Veröffentlichungstag der Anmeldung:
**12.09.2007 Patentblatt 2007/37**

(73) Patentinhaber: **Fraunhofer-Gesellschaft zur Förderung der angewandten Forschung e.V. 80686 München (DE)**

(72) Erfinder:
• **UHLIG, Christoph Fraunhofer Institut Kantstrasse 55 14513 Teltow (DE)**
• **BAUER, Monika c/o Fraunhofer Institut Für Kantstrasse 55 14513 Teltow (DE)**

(56) Entgegenhaltungen:
**EP-A- 0 158 234       EP-A- 0 250 005
WO-A-02/099218        US-A- 3 865 679
US-A- 5 444 959**

**Beschreibung**

Die Erfindung betrifft ein Bauelement, insbesondere für Verkleidungs- oder Konstruktionszwecke, mit den Merkmalen des Oberbegriffs von Anspruch 1. Des Weiteren betrifft die Erfindung ein Verfahren zur Herstellung eines derartigen Bauelements und dessen Verwendung. Die Erfindung betrifft auch ein Werkzeug zur Herstellung des Bauelements.

Es ist bekannt, im Leichtbau zum Beispiel als Verkleidungs-oder Konstruktionselemente schichtförmige Bauteile (Sandwich-Bauteile) zu verwenden. Ein schichtförmiges Bauteil, z. B. für eine selbsttragende Karosserie umfasst einen Stapelaufbau aus zwei Deckschichten, zwischen denen ein Kernwerkstoff (eine Kernschicht) angeordnet ist. Diese Schichten sind so gestaltet, dass das Bauteil eine möglichst geringe Masse und dennoch eine möglichst hohe Belastbarkeit besitzt. Daher wird für die Deckschichten ein Material mit einem hohen Elastizitätsmodul, wie z. B. faserverstärkter Kunststoff gewählt, während für die Kernschicht ein ggf. weniger steifes, jedoch möglichst leichtes Material verwendet wird. Die Kernschicht wird bisher in der Praxis häufig aus Schaummaterialien oder Wabenmaterialien hergestellt. Herkömmliche Wabenmaterialien bestehen typischerweise aus Zellen, deren Seitenwände die charakteristische Wabe mit einer sechseckigen Grundfläche (sog. Honigwabe) bilden.

Die Schaummaterialien weisen mit ihrer geringen Steifigkeit, der relativ hohen Massendichte und ihrer hohen Brennbarkeit eine Reihe von Nachteilen auf. Dazu im Gegensatz besitzen Wabenmaterialien ein besseres Verhältnis von Steifigkeit zur Masse und eine geringere Brennbarkeit. Dennoch unterliegen die herkömmlichen Wabenmaterialien aufgrund der folgenden Nachteile Beschränkungen bei der Anwendung im Leichtbau.

Ein erster Nachteil ist durch die aufwändigen Verfahren zur Herstellung der Zellen des Wabenmaterials gegeben. Ein herkömmliches Verfahren besteht beispielsweise darin, dass zunächst Papierschichten durch Papierstege miteinander verklebt, danach auseinandergezogen und schließlich mit einem Phenolharz getränkt und gehärtet werden. Von diesen Papierwaben abgeschnittene Scheiben können dann als Kernschichten für den Leichtbau verwendet werden. Zur Erzielung gleichförmiger, stabiler Kernschichten müssen alle Phasen dieses Verfahrens mit hoher Genauigkeit durchgeführt werden. Dies erfordert komplexe und teuere Präzisionsmaschinen. Bei anderen herkömmlichen Techniken (siehe z. B. WO 00/58080 und WO 00/32382) werden die Zellen durch eine Verformung von sog. Faltwaben gebildet. Auch diese Verfahren sind wegen der hohen Genauigkeitsanforderungen und den damit verbundenen Herstellungskosten nachteilig.

Ein weiterer Nachteil herkömmlicher Wabenmaterialien besteht in der Anisotropie der Stabilitätseigenschaften. Da die Zellen durch ein Zusammenkleben gefalteter Papierstreifen gebildet werden, weist jede Zelle in bestimmten Richtungen Seitenwände mit einer doppelten Papierlage und in anderen Richtungen Seitenwände mit einer einfachen Papierlage auf, wodurch die Steifigkeit des Wabenmaterials in den verschiedenen Richtungen verschieden beeinflusst wird.

Schließlich besitzen die herkömmlichen Wabenmaterialien den Nachteil einer geringen Gestaltungsfreiheit bei der Anpassung für eine konkrete Anwendung. Beispielsweise kann eine Honigwaben-Kernschicht nicht ohne weiteres an bestimmten Stellen lokal versteift werden. Eine Versteifung wird bisher nur mit Kernfüllmaterialien erreicht, die jedoch zu Gewichtsproblemen führen. Außerdem können gekrümmte Sandwich-Strukturen unter Verwendung der Honigwabe als Kernwerkstoff nur realisiert werden, indem entweder die eben vorliegende Honigwabe entsprechend den benötigten Krümmungen gefräst wird, oder mit Krafteinwirkung beim Verpressen der benötigten Krümmung angepasst wird (im sogenannten "crushed core"-Verfahren), wobei die Honigwabe zerstört wird.

Eine Alternative zu den Wabenmaterialien stellen Flächengebilde dar, die durch Tiefziehen eines Kunststoffmaterials geformt werden und sich durch eine Basisschicht mit kegelstumpfförmigen Erhebungen auszeichnen (siehe z. B. DE 197 21 370, EP 411 372, EP 512 431). Anwendungen derartiger Flächengebilde wurden für den Leichtbau (EP 158 234, EP 250 005), im Automobilbau (EP 409 120) und auch bei anderen Funktionselementen (EP 725 454) vorgeschlagen. Diese Flächengebilde besitzen jedoch den Nachteil einer relativ geringen Drucksteifigkeit, so dass Leichtbauelemente, die mit diesen Flächengebilden hergestellt sind, eine hohe Deformationsneigung besitzen.

Aus US 5 683 782 und US 5 032 208 sind Leichtbauelemente bekannt, bei denen die Kernschichten durch eine Vielzahl von zylinderförmigen Tubusabschnitten gebildet werden, die auf ihren Außenseiten miteinander verbunden sind. Nachteilig an diesen Leichtbauelementen sind insbesondere das Herstellungsverfahren, bei dem die Kernschichten aus Stapeln an ihren Außenseiten verklebter Rohre gesägt werden, und die geringe Variabilität bei der Anpassung der Leichtbauelemente an eine konkrete Aufgabe.

Die Aufgabe der Erfindung ist es, ein verbessertes Bauelement, insbesondere für den Leichtbau bereitzustellen, mit dem die Nachteile der herkömmlichen Kernschichtmaterialien überwunden werden können und das sich durch eine hohe Steifigkeit auszeichnet. Das Bauelement soll des Weiteren mit einfachen Mitteln herstellbar sein und eine hohe Gestaltungsfreiheit bei der Anpassung an die jeweilige Anwendung aufweisen. Die Aufgabe der Erfindung ist es auch, ein verbessertes Verfahren zur Herstellung eines Bauelements für den Leichtbau bereitzustellen.

Diese Aufgaben werden mit einem Bauelement und einem Verfahren mit den Merkmalen der Patentansprüche 1 und 21 gelöst. Vorteilhafte Ausführungsformen und Anwendungen der Erfindung ergeben sich aus den abhängigen Ansprüchen.

Vorrichtungsbezogen basiert die Erfindung auf der allgemeinen technischen Lehre, ein Bauelement bereitzustellen, das aus zwei Abstandsformteilen mit einer Vielzahl von Hohlformelementen zusammengesetzt ist, die nebeneinander und sich an ihren Seitenwänden außen berührend angeordnet sind, wobei das Bauelement eine im Wesentlichen flächige Form besitzt. Ein Hohlformelement ist ein Gebilde mit einem inneren Hohlraum, der von einer Seitenwand umgeben wird. Die Seitenwand jedes Hohlformelements ist durchgehend umlaufend gebildet, d. h. die Seitenwand besteht einstückig aus einem Material, so dass die Seitenwand entlang einer Umfangslinie um den Hohlraum unterbrechungsfrei gebildet ist. Die Hohlformelemente sind vorzugsweise napfförmig oder alternativ kugelförmig auf der Basisschicht gebildet.

Gemäß einem wesentlichen Merkmal der Erfindung sind zwei Abstandsformteile vorgesehen, die sich parallel zur Ausdehnung des Bauelements erstrecken und Anordnungen der Hohlformelemente bilden. Jedes der Abstandsformteile weist eine Basisschicht auf, von welcher die einstückig zu dem jeweiligen Abstandsformteil gehörenden Hohlformelemente hervorragen. Die Hohlformelemente sind mit gegenseitigen Abständen angeordnet, deren Maße das Einsetzen von Hohlformelementen des jeweils anderen Abstandsformteils erlauben. Die Abstandsformteile sind mit zueinander entgegengesetzter Orientierung angeordnet, so dass die Hohlformelemente des einen Abstandsformteils in die Abstände zwischen den Hohlformelementen des anderen Abstandsformteils und umgekehrt ragen. Gemäß einem weiteren wesentlichen Merkmal der Erfindung ist vorgesehen, dass die zueinander benachbarten Hohlformelemente sich gegenseitig an ihren Außenseiten berühren. Vorzugsweise sind die Außenseiten entlang von Kontaktflächen oder -linien miteinander verbunden. Durch die Verbindung der Seitenwände wird vorteilhafterweise wie im Gitter eines Festkörpers ein dreidimensionaler, quasi-isotroper Verbund von Zellen gebildet, der Zug-, Scher- oder Druckkräfte in allen Raumrichtungen aufnehmen kann.

Die zueinander benachbarten Hohlformelemente umfassen insbesondere die nächsten Nachbarn, die entsprechend der flächigen Ausdehnung des Bauelements auf allen Seiten eines betrachteten Hohlelements angeordnet sind. Die Zahl der benachbarten (nächsten) Profilelemente hängt von der Packungsdichte (Flächendichte) der Hohlformelemente ab und beträgt bspw. bei einem quadratischen Gitter vier oder bei einem hexagonalen Gitter sechs. Bei anderen Geometrien können drei oder auch mehr als vier nächste Nachbarn vorhanden sein.

Das erfindungsgemäße Bauelement besitzt eine vorbestimmte flächige Ausdehnung. Dies bedeutet, dass sich das Bauelement im Wesentlichen zweidimensional entlang einer ebenen oder gekrümmten Bezugsfläche erstreckt und eine Dicke entsprechend des durch die Höhe der Hohlformelemente gebildeten Abstands aufweist. Die Bezugsfläche zur Beschreibung der flächigen Ausdehnung des Bauelements kann bspw. in den folgenden Fällen gekrümmt sein. Erstens kann sich eine Krümmung unter den praktischen Anwendungsbedingungen, z. B. als Kernschicht in einem Leichtbauelement ergeben. Zweitens können die Abstandsformteile lokal verschiedene Formen besitzen, so dass die dichte Packung mit den verbundenen Seitenflächen eine gekrümmte Gesamtform ergibt. Schließlich kann das Bauelement Deformationsbereiche mit einer verminderten Steifigkeit aufweisen.

Das erfindungsgemäße Bauelement besitzt die folgenden Vorteile. Erstens ist die Drucksteifigkeit erfindungsgemäßer Bauelemente, insbesondere als Kernschicht in einem Leichtbauelement erheblich im Vergleich zur Drucksteifigkeit der oben beschriebenen, herkömmlichen Flächengebilde (z. B. gemäß DE 197 21 370) erhöht. Die Erfinder haben festgestellt, dass die leichte Deformierbarkeit der herkömmlichen Flächengebilde dadurch verursacht wird, dass die einzelnen, voneinander beabstandet stehenden kegelstumpfförmigen Erhebungen bei einer äußeren Krafteinwirkung relativ leicht deformierbar sind, da die Seitenwände dieser Erhebungen sich leicht verbiegen oder ausbeulen können. Dazu im Gegensatz wird beim erfindungsgemäßen Bauelement durch die sich berührenden und miteinander verbundenen Seitenwände der Hohlformelemente einer Krafteinwirkung durch Druck oder Schub ein deutlich gesteigerter Widerstand entgegengesetzt. Die Seitenwände der Hohlformelemente werden durch den Verbund benachbarter Hohlformelemente stabilisiert. Eine einzelne Seitenwand eines Hohlformelements kann nicht mehr z. B. nach innen einknikken, ohne dass die Seitenwand des benachbarten Hohlformelements nach außen geknickt wird. Da die Hohlformelemente in der Regel gegen ein Einknicken nach innen oder außen verschiedene Steifigkeiten besitzen, wird die gegenseitige Stabilisierung der Hohlformelemente erreicht. Des weiteren wird die Stabilität erhöht, weil jede einzelne Seitenwand mit allen anderen Seitenwänden verbunden ist und durch diesen dreidimensionalen Verbund aller Seitenwände stabilisiert wird.

Ein weiterer Vorteil erfindungsgemäßer Bauelemente besteht darin, dass insbesondere bei der Anordnung der Hohlformelemente entsprechend einem regelmäßigen Flächengitter die oben genannte Anisotropie herkömmlicher Wabenmaterialien überwunden wird.

Vorteilhafterweise kann mit dem erfindungsgemäßen Bauelement eine Kernschicht für ein Leichtbauelement gebildet werden, die bei vergleichbarer Dimensionierung (Größe der Hohlräume der Hohlformelemente bzw. der Zellen in Wabenmaterial, Massendichte) die Steifigkeit von Wabenmaterial erreicht. Gleichzeitig kann jedoch das erfindungsgemäße Bauelement mit erheblich einfacheren Mitteln z. B. aus einer Vielzahl einzelner Hohlformelemente oder durch Zusammenfügen von zueinander komplementären Abstandsformteilen, welche die Hohlformelemente als Erhebungen enthalten, hergestellt werden.

Die geometrische Gestaltung der Hohlformelemente und deren Anordnung kann auf der Grundlage der folgenden Aspekte gewählt werden. Die Hohlformelemente sind in zwei Raumrichtungen periodisch angeordnet und weisen jeweils eine umlaufende Seitenwand, sowie eine Deckfläche (Stirnende) und eine Grundfläche auf. Das Stirnende und die Grundfläche der Hohlformelemente sind parallel zueinander ausgerichtet und weisen vorzugsweise die gleiche Form auf, d.h. sie sind einander selbstähnlich, also entweder von identischer Größe und Form, oder aber von gleicher Form, aber verschieden voneinander durch einen Skalierungsfaktor. Der Skalierungsfaktor zwischen Grundfläche und Stirnende ist kleiner oder gleich 1, d.h. das Stirnende ist entweder gleichgroß oder kleiner als die Grundfläche. Die geometrische Form der Grundfläche und des Stirnendes werden derart gewählt, dass jedes eine mindestens zweizählige Symmetrie aufweist. Es sind höherzählige Symmetrien oder auch rotationssymmetrische Grundflächen und Stirnenden (Kreise) möglich. Ferner zeichnen sich die Hohlformelemente dadurch aus, dass sie eine Symmetrieachse aufweisen, die die Mittelpunkte von Deck- und Grundflächen miteinander verbindet und senkrecht zu beiden Flächen ist. Die Hohlformelemente weisen damit in Bezug auf diese Symmetrieachse entsprechend der Form der Deck- und Grundflächen eine Rotationssymmetrie auf, die zweizählig (z.B. bei rechteckiger Form der Grund- und Deckfläche), dreizählig (z.B. bei dreieckiger Grund- und Deckfläche), vierzählig, noch höherzählig (z.B: sechszählig bei sechseckiger Grundfläche) sein kann. Deck- und Grundfläche können also z. B. Kreise, Ellipsen, gleichseitige oder gleichschenklige Dreiecke, Rechtecke, Quadrate sein.

Die Hohlformelemente zeichnen sich ferner gemäß einer bevorzugten Variante bei Bildung der Napfform dadurch aus, dass die Grundfläche offen ist, das heißt, das Hohlformelement (Flächenelement) besteht nur aus der umlaufenden Seitenwand und der Deckfläche.

Diese dreidimensionalen Hohlformelemente werden durch die Basisschicht (Basisfläche) in Position zueinander gehalten. Dabei sind die Symmetrieachsen der einzelnen Hohlformelemente parallel zueinander und senkrecht zur vorzugsweise ebenen Basisschicht. Die Basisschicht verläuft in einer Ebene mit den offenen Grundflächen, d.h. die Basisfläche ist mit der unteren Kante der umlaufenden Seitenwände der Hohlformelemente verbunden. Damit bilden die zur Positionierung dienende Basisschicht und die mit dieser verbundenen Hohlformelemente ein dreidimensionales, zusammenhängendes Flächengebilde, das Abstandsformteil. Dieses dreidimensionale Flächengebilde ist durch eine in zwei Raumrichtungen, die in der Ebene der Basisschicht liegen, periodische Anordnung der Hohlformelemente gekennzeichnet.

Die in zwei Raumrichtungen periodische Anordnung der Hohlformelemente kann zum Beispiel für ein quadratisches Gitter mit der Gitterkonstante A, dem Durchmesser der Deckfläche d1, dem Durchmesser der Grundfläche d2 (mit d1 ≤ d2) und der Diagonale des Gitters D mit D = d1 + d2 und $D = A / \sqrt{2}$ beschrieben werden. Alternativ ist eine Geometrie realisierbar, für die $D > A / \sqrt{2}$ gilt. Dies bedeutet, dass eine Fehlanpassung zwischen der Größe der Hohlformelemente des einen Abstandsformteils und der Abstände zwischen den Hohlformelementen des anderen Abstandsformteils gebildet wird, durch die ein erhöhter Druck auf die Seitenwände erzielbar ist und Toleranzen besser ausgeglichen werden können.

Vorteile ergeben sich auch aus der hohen Gestaltungsfreiheit bei der Wahl des Typs der zwischen den Hohlformelementen gebildeten Verbindung. Wenn die Hohlformelemente formschlüssig miteinander verbunden werden, können sich Vorteile für die Herstellung des Bauelements ergeben, in dem die Verbindung zwischen den Seitenwänden bereits bei der Anordnung der Hohlformelemente im Verbund des Bauelements hergestellt werden. Als formschlüssige Verbindung wird zum Beispiel eine Verklammerung oder Verankerung mit Vorsprüngen auf den Oberflächen der Seitenwände, wie z. B. eine Klett- oder Flauschverbindung gebildet. Wenn die zu verbindenden Seitenflächen beim Fügen durch entsprechende Vorrichtungen oder durch das Deformationsverhalten der Seitenwände aneinandergepresst werden und eine kraftschlüssige Verbindung zwischen den Hohlformelementen gebildet wird, können sich Vorteile für eine zusätzliche Stabilisierung der Hohlformelemente und damit eine erhöhte Steifigkeit ergeben. Bei einer kraftschlüssigen Verbindung wird das Material der Seitenwände der Hohlformelemente einer mechanischen Spannung ausgesetzt, unter deren Wirkung die Stabilität erhöht wird. Die Erzeugung des Anpressdruckes der Seitenwände aneinander erfolgt zum Beispiel bei einem Fügeprozeß, wie z. B. beim Verkleben. Als kraftschlüssige Verbindung wird zum Beispiel ein gegenseitiges Verklemmen gewählt. Schließlich können sich, wenn eine stoffschlüssige Verbindung zwischen den sich berührenden Seitenwänden gebildet wird, Vorteile für eine besonders stabile seitliche Vernetzung der Hohlformelemente und damit auch für eine erhöhte Steifigkeit des Bauelements ergeben. Die stoffschlüssige Verbindung umfasst bspw. eine Verklebung mit einem Klebstoff oder eine thermische Verbindung wie z. B. Verschweißen oder Verlöten. Stoffschlüssige Verbindungen können zusätzlich den Vorteil einer vergrößerten Kontaktfläche zwischen benachbarten Hohlformelementen besitzen. Die genannten Formen der Verbindung können erfindungsgemäß einzeln oder in Kombination realisiert werden.

Vorteilhafterweise besteht des Weiteren eine hohe Variabilität bei der Auswahl des Materials der Abstandsformteile mit den Hohlformelementen. Deren Seitenwände können gemäß bevorzugten Ausführungsformen der Erfindung aus Fasermaterialien, insbesondere textilen oder vollflächigen Fasermaterialien, oder aus Folien bestehen. Fasermaterialien können Vorteile bei der Herstellung und dem Verbund der Hohlformelemente und für die Stabilität des Bauelements besitzen. Wenn die Seitenwände der Hohlformelemente jeweils aus einer umlaufenden Folie bestehen, können sich Vorteile für die gegenseitige Verbindung der Hohlformelemente ergeben. Besonders bevorzugt werden Hohlformelemente verwendet, die aus Papier, Vlies, tiefgezogenen Gestricken oder Gewirken, Kunststofffolien, insbesondere thermoplastischen oder duroplastischen Folien, und/oder metallischen oder keramischen Folien hergestellt sind.

Gemäß weiteren Varianten der Erfindung enthalten die Seitenwände der Hohlformelemente mindestens eine der folgenden Modifizierungen, mit denen vorteilhafterweise eine verbesserte Fixierung oder Stabilisierung der Seitenwände erzielt werden kann. Erstens können Seitenwände mit einem Bindemittel imprägniert oder beschichtet sein. Das Bindemittel umfasst bspw. ein aushärtbares Harz. Zweitens können die Seitenwände eine Substruktur, zum Beispiel Unebenheiten aufweisen, welche die Steifigkeit der Seitenwände verbessert und auch eine gegenseitige Stabilisierung der miteinander verbundenen Seitenwände benachbarter Hohlformelemente fördert.

Die Basisschichten der erfindungsgemäß vorgesehenen Abstandsformteile bestehen vorzugsweise aus demselben Material wie die Seitenwand der jeweiligen Hohlformelemente. Die Basisschichten verlaufen im Wesentlichen senkrecht zur Höhenausdehnung der Hohlformelemente. Vorteile der Basisschichten sind auch bei der Bewegung und Ausrichtung der Hohlformelemente für deren Verbund im erfindungsgemäßen Bauelement oder bei der Verbindung des Bauelements mit Deckschichten z. B. zur Herstellung eines Leichtbauelements gegeben.

Das erfindungsgemäße Bauelement mit den seitlich über die Basisschichten verbundenen Hohlformelementen kann einfach hergestellt werden, indem in die Lücken zwischen den Erhebungen, welche die Hohlformelemente in einem Abstandsformteil bilden, entsprechend dimensionierte Hohlformelemente eingesetzt werden. Besondere Vorteile für die Herstellung des erfindungsgemäßen Bauelements ergeben sich, wenn das Bauelement aus zwei zueinander komplementären Abstandsformteilen zusammengesetzt ist, die jeweils voneinander beabstandete Hohlformelemente umfassen. Die Lücken zwischen den Hohlformelementen, die in dem ersten Abstandsförmteil Erhebungen bilden, sind gerade an die Größe der Hohlformelemente angepasst, welche die Erhebungen des zweiten Abstandsformteils bilden, und umgekehrt.

Weitere Vereinfachungen und eine erhöhte Isotropie der Steifigkeit des Bauelements ergeben sich, wenn beide Abstandsformteile die gleiche Form aufweisen und innerhalb jedes Abstandsformteils die Lücken zwischen den Hohlformelementen gerade zur passenden Aufnahme eines Hohlformelements des anderen Abstandsformteils eingerichtet sind.

Vorteilhafterweise wird die mechanische Stabilität des erfindungsgemäßen Bauelements zusätzlich erhöht, wenn die Deckflächen der Hohlformelemente von einem Abstandsformteil die Basisfläche in den Lücken zwischen den Hohlformelementen des anderen Abstandsformteils berühren. Ein mechanischer Kontakt ist nicht nur zwischen den Seitenwänden benachbarter Hohlformelemente, sondern auch zwischen den Deck- und Basisflächen gegeben. Vorzugsweise sind die Deck- und Basisflächen flächig miteinander verbunden. Die Verbindung ist insbesondere so wie die Verbindung zwischen den Seitenwänden gegeben.

Bei einer besonders bevorzugten Ausführungsform weisen die Hohlformelemente entlang ihrer Höhenausdehnung über der Basisschicht nicht eine konstante Querschnittsfläche, sondern eine Verjüngung auf. Die Seitenwände der Hohlformelemente sind gegenüber der flächigen Ausdehnung des Bauelements geneigt. Durch die Verjüngung der Hohlformelemente vom Fußende zum entgegengesetzten Ende (im Folgenden Stirnende genannt) wird eine Orientierung der Hohlformelemente festgelegt. Zur Schaffung einer geschlossenen, vorzugsweise ebenen Form des Bauelements besitzen zwei seitlich an ihren Seitenwänden verbundene Hohlformelemente jeweils eine entgegengesetzte Orientierung. Der Verbund von Hohlformelementen mit zueinander entgegengesetzt geneigten Seitenwänden besitzt den besonderen Vorteil, dass bei Druck- oder Schubbelastungen durch die Schrägstellung der Seitenwände weitere Kräfte aufgenommen werden können. Die Erfinder haben festgestellt, dass die Druckfestigkeit des erfindungsgemäßen Bauelements mit seitlich verklebten Hohlformelementen im Vergleich zu ähnlich dimensionierten, herkömmlichen Flächengebilden mit voneinander beabstandeten kegelstumpfförmigen Erhebungen auf das Dreibis Fünffache erhöht wird. Dadurch kann ein hervorragendes Steifigkeits-Gewichts-Verhältnis erzielt werden.

Ein weiterer Vorteil bei der Gestaltungsfreiheit des erfindungsgemäßen Bauelements ist dadurch gegeben, dass die Seitenwände der Hohlformelemente eben oder alternativ konkav gewölbt sein können. Ebene Seitenwände besitzen den Vorteil, dass zwischen benachbarten Hohlformelementen flächige Kontaktzonen gebildet werden, die eine besonders feste Verbindung ermöglichen. Gewölbte Seitenflächen haben hingegen den Vorteil, dass an die gegenseitige Ausrichtung der sich berührenden Hohlformelemente weniger starke Genauigkeitsanforderungen gestellt werden müssen, um eine für die feste Verbindung ausreichende linien- oder streifenförmige Kontaktzone zu bilden.

Gemäß einer vorteilhaften Variante der Erfindung können die Hohlformelemente so gebildet sein, dass sie sich im zusammengesetzten Zustand der Abstandsformteile vor der Fertigstellung des erfindungsgemäßen Bauelements zunächst nur linien- oder punktförmig an ihren Seitenwänden berühren. Nach Ausübung eines Anpressdruckes zur gegenseitigen Verbindung der Abstandsformteile können sich die Hohlformelemente so deformieren, dass flächige Kontaktzonen gebildet werden, in denen die Verbindung zwischen den benachbarten Hohlformelementen gegeben ist.

Vorteilhafterweise wird damit die mechanische Stabilität des erfindungsgemäßen Bauelements erhöht. Besonders bevorzugt werden die Seitenwände der napf- oder kugelförmigen Hohlformelemente aus einfachen geometrischen Formen z. B. bei ebenen Seitenflächen als Prismen mit einer drei-, vier- oder mehreckigen, vorzugsweise regelmäßigen Grundfläche, insbesondere als Quader, besonders bevorzugt als Würfel, oder als Pyramide, insbesondere mit einer viereckigen oder hexagonalen Grundfläche oder als entsprechender Pyramidenstumpf, oder bei gewölbten Seitenwänden als Zylinder, insbesondere Kreiszylinder oder Zylinder mit elliptischer Grundfläche, Kegel, insbesondere Kreiskegel oder Kegel mit elliptischer Grundfläche, oder entsprechende Kegelstümpfe, Kugeln, Halbkugeln, Halbkugelsegmente, Halbellipsoide oder Halbellipsoidsegmente gebildet. Im zusammengesetzten Zustand des erfindungsgemäßen Bauelements können die Hohlformelemente Deformationen durch ein gegenseitiges lokales Aneinanderdrücken (gegenseitige lokale Verdrängungen) benachbarter Hohlformelemente aufweisen.

Die Bereitstellung konkav gewölbter Seitenwände besitzt einen Vorteil dahingehend, dass der Druck der Seitenwände aufeinander beim kraftschlüssigen Verbinden erhöht werden kann. Diese Wirkung kann noch verbessert werden, wenn auch die Stirnenden der Hohlformelemente eine konkave Wölbung aufweisen.

Gemäß bevorzugten Ausführungsformen der Erfindung sind die Hohlformelemente in dem Bauelement wenigstens auf der Seite eines der Abstandsformteile als ein rechteckiges, insbesondere quadratisches Gitter, ein hexagonales Gitter oder ein Liniengitter angeordnet. Damit wird vorteilhafterweise eine hohe Isotropie der Steifigkeit des Bauelements und eine hohe Packungsdichte der Hohlformelemente erreicht.

Allgemein kann der erfindungsgemäße Verbund aus seitlich aneinander fixierten Hohlformelementen als eigenständiges Bauelement insbesondere im Leichtbau z. B. als Verkleidung, zur Schwingungsdämpfung, insbesondere zur Schalldämpfung, oder als Aufprallschutz verwendet werden. Bevorzugt ist jedoch die Schaffung eines Schichtaufbaus (Sandwichaufbau) bei dem das Bauelement wenigstens einseitig eine Deckschicht aufweist. Mit der Deckschicht kann vorteilhafterweise eine erhöhte Biege- und Drucksteifigkeit erreicht werden. Des Weiteren wird mit der Deckschicht ein erhöhter Brandschutz erreicht. Gemäß einer besonders bevorzugten Variante der Erfindung sind zwei Deckschichten vorgesehen, zwischen den das Bauelement als Kernschicht angeordnet ist.

Die mindestens eine Deckschicht besteht zur Erzielung eines hohen Elastizitätsmoduls besonders bevorzugt aus einem Verbundwerkstoff, z. B. faserverstärktem Duroplast oder Thermoplast oder alternativ aus Metall, z. B. Aluminium, Stahl, Titan oder Magnesium oder einem Kunststoff, z. B. Polypropylen, oder Polyethylen, vorzugsweise mit hohem Kristallisationsgrad, oder Hochleistungs-(Hoch-Tg)-Thermoplast wie z. B. PEEK.

Weitere vorteilhafte Ausführungsformen der Erfindung zeichnen sich durch eine lokale Variation der Steifigkeit des Bauelements aus, die durch mindestens eine der folgenden Maßnahmen erreicht wird.

Erstens können in einem Bauelement gerade Hohlformelemente, deren Querschnittsfläche konstant ist, mit sich verjüngenden Hohlformelementen kombiniert sein. In Teilbereichen, die vorzugsweise Druckkräfte aufnehmen sollen, werden Hohlformelemente mit geraden Seitenwänden, die senkrecht zur Ausdehnung des Bauelements ausgerichtet sind, verwendet, während in Bereichen, in denen vorzugsweise Schubkräfte aufgenommen werden sollen, geneigte Seitenwände der Hohlformelemente vorgesehen sind.

Zweitens kann eine lokale Variation der Steifigkeit durch die Schaffung von mindestens einem Deformationsbereich erzielt werden, in dem die Größe, Materialien oder Formen der Hohlformelemente zur Bildung einer verminderten Steifigkeit gewählt sind oder in dem anstelle der miteinander verbundenen Hohlformelemente voneinander beabstandete Hohlformelemente angeordnet sind. Es können beispielsweise Hohlformelemente mit einer verminderten Flächendichte angeordnet sein, um eine Deformierbarkeit zu erreichen.

In einem Bereich kann zur Variation der Steifigkeit auf eine der beiden komplementären Abstandsformteile verzichtet werden, so dass in diesem Bereich verminderter Steifigkeit nur die Hohlformelemente des einen Abstandsformteils vorgesehen sind (Einfach-Anordnung), in benachbarten Bereichen dagegen die beiden komplementär angeordneten (und miteinander verbundenen) Abstandsformteile (Doppel-Anordnung) eine wesentlich höhere Steifigkeit einstellen. Dies kann z.B. dazu verwendet werden, gekrümmte Sandwich-Bauteile zu realisieren, wo die Krümmung in einfacher Weise durch partielle Einfach-Anordnung einstellbar ist.

Drittens kann das Bauelement mindestens einen Füllbereich enthalten, in dem mindestens ein Hohlformelement, vorzugsweise jedoch mehrere Hohlformelemente mit einer Kernfüllmasse gefüllt sind. Der Füllbereich ermöglicht vorteilhafterweise eine lokale Verfestigung, z. B. zur Anbringung weiterer Konstruktionselemente (zum Beispiel Schrauben). Die Kernfüllmasse umfasst vorzugsweise Keramik oder organische Materialien, wie zum Beispiel Kunststoffe. Vorteilhafterweise können beim erfindungsgemäßen Bauelement eine oder mehrere Kernfüllmassen von beiden Seiten des Bauelements eingebracht werden. Ein besonderer Vorteil der Erfindung besteht in Bezug auf die Herstellung des Bauteils darin, dass die Hohlformelemente mit der Kernfüllmasse bereits vor dem Zusammensetzen der zueinander komplementären Abstandsformteile gefüllt werden können.

Gemäß einer weiteren bevorzugten Ausführungsformen der Erfindung sind die Abstandsformteile relativ zueinander versetzt angeordnet. Ein Teil von einem der Abstandsformteile ragt mit einer Vielzahl von Hohlformelementen über einen Rand des anderen Abstandsformteils hinaus. Mindestens ein weiteres Abstandsformteil ist mit dem vorragenden Teil durch Zusammensetzen der zueinander komplementären Hohlformelemente verbunden. Vorteilhafterweise können damit ausgedehnte Kernwerkstoff-Bauelemente aus komplementären Abstandsformteilen (Noppenstücke) hergestellt werden, die kleiner als das gesamte Bauelement sind. Hierzu werden die Abstandsformteile nicht direkt übereinander gesetzt, sondern zueinander versetzt angeordnet. Ein oberes Abstandsformteil überbrückt wenigstens zwei untere Abstandsformteile. Wird dieses Verbundprinzip in zwei Raumrichtungen ausgedehnt, werden z.B. neun untere Abstandsformteile mit vier oberen Abstandsformteilen so verbunden werden, dass jedes von den vier oberen jeweils vier untere Elemente verbindet.

Verfahrensbezogen wird die o. g. Aufgabe durch die Herstellung des erfindungsgemäßen Bauelements mit den folgenden Schritten gelöst. Zunächst werden die Abstandsformteile mit den Hohlformelementen so angeordnet, dass sich die Seitenwände benachbarter Hohlformelemente außen gegenseitig berühren. Diese Anordnung erfolgt durch ein Zusammenstecken der o. g. zueinander komplementär gebildeten Abstandsformteile. Anschließend erfolgt die Verbindung der sich berührenden Seitenwände entsprechend einem der o. g. Verbindungstypen. Die erfindungsgemäße Verfahrensweise stellt gegenüber der herkömmlichen Technik zur Bildung von Wabenmaterialien eine erhebliche Vereinfachung dar. Des Weiteren bietet sie eine hohe Flexibilität bei der Gestaltung der mechanischen Eigenschaften des Bauelements noch während dessen Herstellung durch die Dimensionierung, Materialwahl und Anordnung der verwendeten Hohlformelemente.

Vorteilhafterweise können die Hohlformelemente in an sich bekannter Weise durch Extrusion, Gießen, zum Beispiel Spritzguss, Prägen oder Tiefziehen hergestellt werden.

Ein weiterer Vorteil der Erfindung im Vergleich zu den herkömmlichen Techniken besteht darin, dass einfache Noppen-Flächengebilde oder Honigwaben nur mit einem heißhärtenden Harz härten (ein raumtemperaturhärtendes Harz würde nicht ausreichen, weil die Lagerstabilität dann nicht gegeben ist), erfindungsgemäß hingegen die beiden Abstandsformteile mit chemisch verschiedenen Substanzen imprägniert werden und erst im zusammengesetzten Zustand der Härtung unterzogen werden können. So könnte zum Beispiel das obere Abstandsformteil mit einem Härter und das untere mit einem Harz imprägniert sein und erst beim Verpressen beider Teile die Härtung stattfinden, wobei die beiden Formteile vorher lagerstabil sind. Alternativ könnten beide Abstandsformteile in einem Vorbereitungsschritt mit einem Klebstoff beschichtet werden, der bei Raumtemperatur trocken ist. Dadurch wird die Handhabung der Abstandsformteile beim Zusammensetzen des Bauelements vereinfacht. Erst beim Erwärmen im zusammengesetzten Zustand wird der Klebstoff weich, so dass die Verbindung zwischen den benachbarten Hohlformelementen hergestellt und anschließend ausgehärtet werden kann.

Gemäß einer bevorzugten Ausführungsform der Erfindung werden die Abstandsformteile während der Verbindung der Seitenwände und ggf. der Deck- und Basisflächen unter Ausübung einer äußeren Druckkraft aneinandergedrückt. Das Zusammendrücken der Abstandsformteile liefert zusätzlich zu der verbesserten Klebeverbindung die folgenden Vorteile.

Allgemein kann die äußere Druckkraft durch zwei zueinander weisende Stempelwerkzeuge mit einer Ausdehnung und Form entsprechend der Gestalt des gesamten Bauelements ausgeübt werden. Es können beispielsweise ebene oder gekrümmte Stempelwerkzeuge verwendet werden, um ebene oder gekrümmte Bauelemente herzustellen. Besonders bevorzugt ist eine Variante, bei der Stempelwerkzeuge verwendet werden, die ein im wesentlichen gleiches Profil wie die Abstandsformteile aufweisen und in der gleichen Weise wie die komplementär ineinander gesteckten Abstandsformteile komplementär zueinander angeordnet und betätigt werden können. Somit können Vorsprünge der Stempelwerkzeuge von innen in die Hohlformelemente hineindrücken, wobei die komplementären Abstandsformteile unter Druck verbunden, z. B. verklebt und gehärtet werden. Damit werden sowohl die Deckflächen der Hohlformelemente des einen Abstandsformteiles mit der Grundfläche (Basisschicht) des komplementären Abstandsformteiles als auch die Seitenwände der Hohlformelemente des einen Abstandsformteiles mit den Seitenflächen der benachbarten Hohlformelemente des komplementären Abstandsformteiles unter Druck verbunden, z. B. verklebt. Vorteilhafterweise werden dabei die Hohlformelemente durch die Druckstempel aufgeweitet, also deformiert. Dadurch werden aus den vorher linienförmigen (oder möglicherweise auch nur punktförmigen) Berührungen der Seitenwände der Hohlformelemente des einen Abstandsformteiles mit den Seitenwänden aller unmittelbar benachbarten Hohlformelemente des komplementären Abstandsformteiles flächige Verbindungen der Seitenwände. Die flächigen Verbindungen bestehen zu allen unmittelbar benachbarten Hohlformelementen des komplementären Abstandsformteiles gleichzeitig. Damit entsteht ein fester, flächiger Verbund aller Hohlformelemente miteinander. Der Verbund ist ähnlich wir die herkömmliche "Honigwabe" strukturiert, diese allerdings nicht notwendigerweise mit sechseckigen Grundelementen und zusätzlich mit dem Vorteil gegenüber der "Honigwabe", dass der Verbund auch mit geneigten Seitenflächen herstellbar ist, was z.B. die Schersteifigkeit des Bauelements erhöhen kann.

Eine besonders vorteilhafte Ausführung ist hierbei die Verwendung von Stempelwerkzeugen aus Kautschuken (Elastomeren), z.B. temperaturbeständigen Silikonkautschuken. Bei flächig ausgedehnten Druckstempeln mit sehr vielen Vorsprüngen, so dass eine große Anzahl von Hohlformelementen miteinander verpresst werden, kann so die Inkompressibilität von Kautschuken ausgenutzt werden. Da die Vorsprünge im Inneren der flächig ausgedehnten Druckstempel unter Druck stehen und durch das Ineinanderdrücken zweier komplementärer Druckstempel nicht durch Scherung oder Dehnung ausweichen können, wird durch die Inkompressibilität des Kautschuks ein hoher Verbindungsdruck auf die Flächen der komplementär ineinander gesteckten Abstandsformteile erreicht. Die Vorsprünge der beiden komplementär ineinander drückenden Elastomer-Stempelwerkzeuge werden sich (und damit die Hohlformelemente der beiden komplemtären Abstandsformteile, in die sie hineindrücken), dabei auf natürliche Weise so verformen, dass der Andruck auf die Flächen aller unmittelbar benachbarten Hohlformelemente der komplementären Abstandsformteile gleich ist und somit eine symmetrische und hochsteife sowie -feste Verbindung entsteht.

In einer anderen Ausführungsform können die Druckstempel auch aus einem starren Material bestehen, mit dem Vorteil, dass damit eine bestimmte Geometrie der Verbindung erzwungen werden kann.

Eine Druckeinrichtung mit zwei komplementär geformten und ineinanderdrückenden Stempelwerkzeugen, die jeweils im wesentlichen das Profil der Abstandsformteile aufweisen, so dass die Vorsprünge der Druckstempel von innen in die Hohlformelemente drücken, stellt einen unabhängigen Gegenstand der Erfindung dar. Die Stempelwerkzeuge können eine Ausdehnung gemäß der Ausdehnung des Bauelements haben, das konkret herzustellen ist, oder alternativ durch zwei Walzen gebildet werden.

Einen weiteren unabhängigen Gegenstand der Erfindung stellt die Verwendung des erfindungsgemäßen Bauelements als Schutzschicht, Wandbauteil, Verkleidungselement oder Kernschicht in einem Leichtbau-Konstruktionsteil dar. Bevorzugte Anwendungen bestehen in der Bautechnik, im Schiffsbau und im Fahr- oder Flugzeugbau.

Weitere Einzelheiten und Vorteile der Erfindung werden im Folgenden unter Bezug auf die beigefügten Zeichnungen beschrieben. Es zeigen:

Figuren 1 bis 8: Illustrationen der Anordnung von Hohlform- elementen bei verschiedenen Ausführungs- formen erfindungsgemäßer Bauelemente;

Figur 9: eine schematische Illustration weiterer Merkmale erfindungsgemäßer Bauelemente;

Figur 10: Kurvendarstellungen zur Illustration der Ergebnisse von Belastungsexperimenten; und

Figuren 11 bis 13: Illustrationen der Anwendung einer Druck- einrichtung zur Ausübung einer Druckkraft bei der Herstellung erfindungsgemäßer Bau- elemente.

Die Erfindung wird im Folgenden unter beispielhaftem Bezug auf bevorzugte Ausführungsformen beschrieben, welche die Geometrie der Hohlformelemente und deren gegenseitige Anordnung illustrieren. Es wird betont, dass die Umsetzung der Erfindung nicht auf die gezeigten Beispiele beschränkt, sondern entsprechend den oben genannten Merkmalen abgewandelt realisierbar ist. In den Zeichnungen sind in der Regel jeweils die Seitenwände und damit gleichzeitig die äußeren Formen der Hohlformelemente schematisch illustriert. Insbesondere die konkreten Dimensionen, Formen und Materialien der Hohlformelemente, die äußere Gesamtform der unten nur ausschnittsweise gezeigten Bauelemente sowie die Typen der Verbindung zwischen den Hohlformelementen werden vom Fachmann in Abhängigkeit von der gewünschten Anwendung gewählt. Die mit geometrischen Begriffen beschriebenen äußeren Formen der Hohlformelemente können bei der Umsetzung der Erfindung unter praktischen Bedingungen durch die Verformung von Materialien von der jeweiligen geometrischen Idealform abweichend gebildet sein.

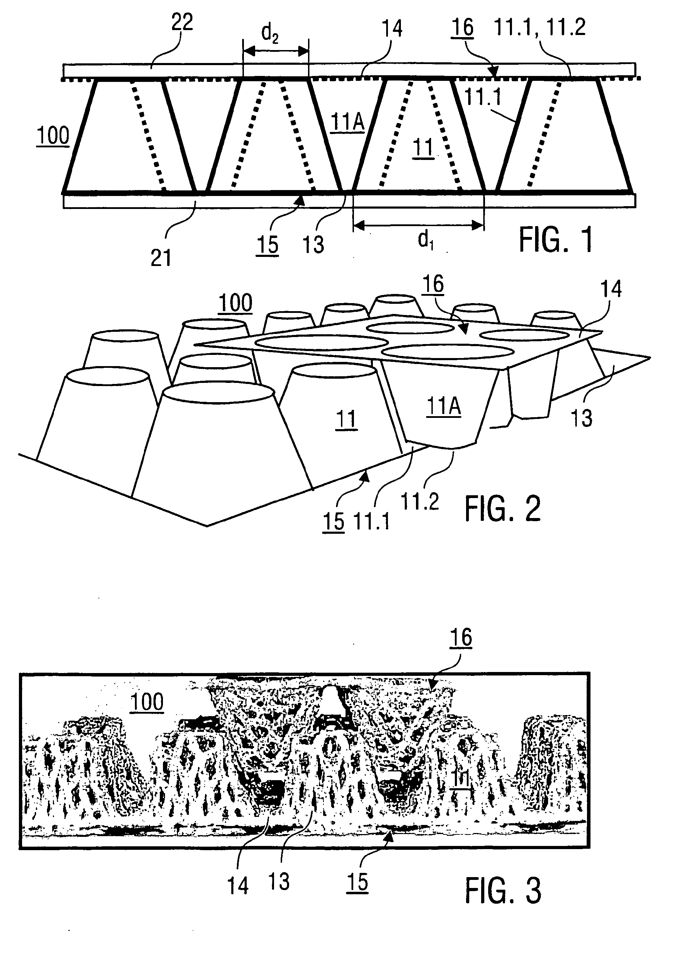

Eine erste Ausführungsform eines erfindungsgemäßen Bauelements 100 mit kegelstumpfförmigen Hohlformelementen 11 ist in den Figuren 1 bis 3 illustriert. Figur 1 zeigt die Seitenteilansicht eines Bauelements 100 mit einem ersten Abstandsformteil 15 (durchgezogen gezeichnet) und einem zweiten Abstandsformteil 16 (gestrichelt gezeichnet). Die Abstandsformteile sind zueinander komplementär geformt und so angeordnet, dass die Hohlformelemente 11 ineinander gesteckt sind. Die Abstandsformteile sind zwischen Deckschichten 21, 22 angeordnet, welche die Oberflächen des Bauelements 100 bilden. Die Deckschichten 21, 22 sind entsprechend mit den Basisschichten 13, 14 der Abstandsformteile 15, 16 verbunden, zum Beispiel verklebt. Das erste Abstandsformteil 15 weist kegelstumpfförmige Hohlformelemente 11 auf, die an ihren Fußenden mit der Basisschicht 13 verbunden sind und zu der einen Seite des Bauelements 100 weisend ein quadratisches Gitter bilden. Die übrigen kegelstumpfförmigen Hohlformelemente 11A sind mit ihren Fußenden über die Basisschicht 14 des Abstandsformteils 16 verbunden und an der entgegengesetzten Seite des Bauelements 100 angeordnet. Die Basisschichten 13, 14 weisen zwischen den Fußenden der Hohlformelemente 11, 11A Abstände auf, die hier als Basisflächen bezeichnet werden (siehe z. B. bei 11.1 in Figur 2).

Jedes Hohlformelement 11, 11A umfasst eine umlaufende Seitenwand und eine Deckfläche 11.2. Die Seitenwände benachbarter Hohlformelemente 11, 11A berühren sich gegenseitig. Die Deckflächen 11.2 berühren in den Abständen zwischen Hohlformelementen die Basisfläche 11.1 des gegenüberliegenden Abstandsformteils.

Die Hohlformelemente 11 besitzen bspw. die folgenden geometrischen Eigenschaften und Dimensionen:

- Anordnung von Kegelstümpfen als quadratisches Gitter,
- d1=10,5 mm, d2=6,5 mm,
- D = d1+d2 = 17 mm,

- Höhe der Kegelstümpfe: 10 mm.

Die Flächenausdehnung parallel zur Bezugsebene 101 oder entlang einer ggf. gekrümmten Bezugsfläche (nicht dargestellt) wird in Abhängigkeit von der Anwendung des Bauelements 100 gewählt und kann typische Dimensionen bis in den m$^2$-Bereich oder darüber besitzen. Das Bauelement 100 gemäß Figur 1 stellt beispielsweise einen Aufprallschutz, eine Schalldämmschicht oder einen Kernwerkstoff in einem Sandwich-Bauteil dar.

Figur 2 zeigt den Verbund aus den Abstandsformteilen 15, 16 (ausschnittsweise) analog zu Figur 1 ohne die Deckschichten in schematischer Perspektivansicht. Die gleich aufgebauten Abstandsformteile sind so ineinander gesteckt, dass ein Hohlformelement (Kegelstumpf) des einen Abstandsformteils sich mit den Seitenflächen von jeweils vier Hohlformelementen des entgegengesetzten (komplementären) Abstandsformteils berühren. Die Deckflächen der Hohlformelemente werden durch Kegelstumpf-Stirnenden gebildet. Die Kegelstumpf-Stirnenden (die freie, kleinere Kreisfläche des Kegelstumpfes) des einen Abstandsformteils berühren zwischen vier Kegelstümpfen das jeweils andere Abstandsformteil. Vorzugsweise ist eine flächige Verbindung zwischen den Kegelstumpf-Stirnenden und der Basisfläche zwischen benachbarten Hohlformelementen des jeweils gegenüberliegenden (komplementären) Abstandsformteils gebildet.

Die Herstellung des in Figur 2 gezeigten Aufbaus umfasst zum Beispiel die folgenden Schritte.

(1) Zuerst wird mit an sich bekannten Verfahren ein tiefziehfähiges Polyester- oder Aramid-Faser-Gestrick (oder -Gewirk) hergestellt und mit einem Reaktivharz, insbesondere mit einem heiß härtenden Reaktivharz, z. B. Phenolharz getränkt. Es wird ein Prepreg-Verfahren angewendet, das ein Tränken des Gestricks in einer Harz-Lösung und ein anschließendes Trocknen (Entfernung des Lösungsmittels und/oder eine Prepolymerisation des Harzes) umfasst, wobei das Reaktivharz nach Abkühlen fest oder hochviskos wird und je nach Beschaffenheit ein klebriges oder vorzugsweise trockenes Vorprodukt gebildet wird.

(2) Anschließend folgt mit ebenfalls an sich bekannten Verfahren ein thermisches Tiefziehen des Vorprodukts mit einer beheizten Tiefziehform. Dabei wird die Gestalt der Abstandsformteile mit den hervorragenden Hohlformelementen gebildet. Bei der Erwärmung wird das Reaktivharz zunächst wieder flüssig. Nach dem Tiefziehen kühlt das Reaktivharz ab, wobei beim erneuten Aushärten die Geometrie des Abstandsformteils fixiert wird. Vorzugsweise wird eine strukturierte Tiefziehform oder Pressform verwendet, die den Seitenwänden der Hohlformelemente die o. g. Substruktur aufprägt. Zur Verbesserung der Trennung der Hohlformelemente von der Tiefziehform kann diese zum Beispiel mit einem Entformungsmittel, zum Beispiel auf PTFE-Basis so behandelt sein, dass das Harz (der Klebstoff) nicht anhaftet. Erfindungsgemäß kann alternativ das Formgebungsverfahren verwendet werden, das in DE 197 21 370 beschrieben ist.

(3) Danach werden die fixierten Abstandsformteile mit einem als Harz geeigneten Klebstoff getränkt. Es wird ein heiß härtendes Harz, z. B. Phenolharz oder heiß härtendes Epoxidharz verwendet. Das Tränken erfolgt in einem Lösungsmittelbad mit einem anschließenden thermischen Trocknen zur Entfernung des Lösungsmittels. Nach dem Trocknen und Abkühlen kann das Harz wiederum je nach Beschaffenheit und Bedarf klebrig oder vorzugsweise trocken sein. Alternativ kann das Harz (zum Tränken) im gelösten oder dispergierten Zustand aufgesprüht werden.

(4) Nachdem bei den Schritten (1) bis (3) die beiden Abstandsformteile getrennt hergestellt wurden, folgt anschließend ein Zusammensetzen des Bauelements 100. Der Zustand des Zusammensetzens ist in Figur 3 mit der photografischen Abbildung eines aus zwei ineinander greifenden Abstandsformteilen 15 und 16 (teilweise dargestellt) gebildeten Bauelements 100 gezeigt. Die Hohlformelemente 11 des Abstandsformteils 15 weisen an ihren Fußenden seitliche Auskragungen auf, über die alle zum Abstandsformteil 15 gehörenden Hohlformelemente 11 miteinander zur Basisschicht 14 verbunden sind. Entsprechend ist auch das hierzu komplementäre Abstandsformteil 16 aufgebaut. Figur 3 illustriert beispielhaft, dass die Abstandsformteile 15, 16 verschiedene Größen aufweisen und relativ zueinander versetzt angeordnet sein können. Ein Teilbereich des unteren Abstandsformteils 15 ragt über den Rand des oberen Abstandsformteils 16. Ein weiteres Abstandsformteil (nicht dargestellt) kann in den freien Teilbereich eingesetzt werden. Nach dem Zusammenstecken der entgegengesetzt orientierten Abstandsformteile 15, 16 folgt ein Härten des Stapel-Verbundes z. B. in einer Heizpresse oder durch so genanntes "VakuumBagging". Der Klebstoff (das Harz) wird bei erhöhten Temperaturen wieder flüssig, so dass die Seitenflächen 12 verklebt werden können. Die Berührung der Seitenflächen 12 der entgegengesetzt orientierten Abstandsformteile 15, 16 wird durch den Pressdruck der Heizpresse gewährleistet. Es können auch andere Formen des Andrückens der Seitenwände (z. B. zum Verkleben), verwendet werden z.B.

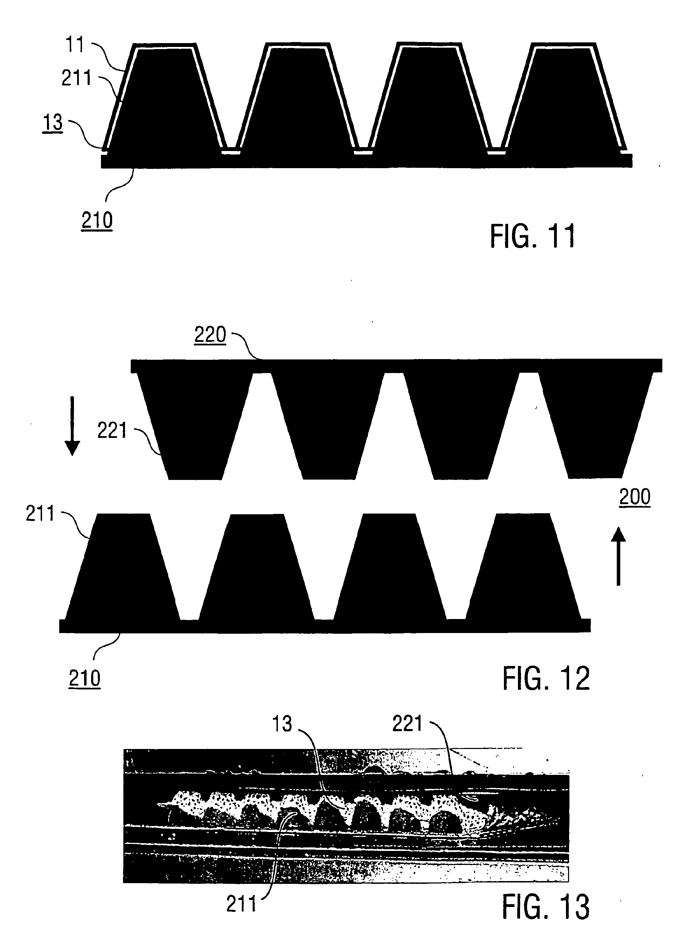

ein Pressen mit sehr hohen Anpressdrücken in einer Druckeinrichtung mit Stempelwerkzeugen, die genau die Hohlformelementform, z. B. Noppenform haben, oder ein Andrücken durch Stifte, die die Form der Hohlformelemente haben. Letzteres könnte auch in einem von-Rolle-zu-Rolle-Verfahren realisiert werden, wo zwei beheizte Rollen mit entsprechenden Stiften entsprechend (komplementär) ineinander greifen. Ebenso könnte der Pressdruck durch geeignetes Vakuumbagging aufgebaut werden. Weitere Einzelheiten der Verwendung einer Druckwerkeinrichtung sind unten unter Bezug auf die Figuren 11 und 12 beschrieben.

Anstelle des Verklebens mit Harz zum Verbinden der Seitenwände kann ein Aufschmelzen der Polyester-Fasern vorgesehen sein.

Bei der Herstellung eines Aufbaus gemäß Figur 1 erfolgt auch ein Verkleben mit den Deckschichten. Die Decklagen können bereits vorher ausgehärtet worden sein oder aber als so genannte Prepregs bei Schritt (4) mit aushärten.

(5) Schließlich folgt eine Abschlussbearbeitung des Bauelements und seine Vorbereitung und Formgebung für die konkrete Anwendung.

Abweichend von dem beschriebenen Verfahren kann anstelle des doppelten Tränkens mit Harz ein einfaches Tränken vorgesehen sein, um die Abstandsformteile zu fixieren und zu verkleben. Harze können entsprechend so formuliert und die Zeit-Temperatur-Führung des Prozesses so gestaltet werden, dass beim Fixieren des Abstandsformteils eine geringere Temperatur und oder eine längere Zeit eingestellt werden kann, als beim späteren Verkleben der Abstandsformteile (ggf. zusammen mit den Deckschichten).

Die Herstellung des Bauelements aus anderen Materialien wie z. B. aus metallischen, keramischen oder thermoplastischen Folien, Papieren, Vliesen usw. erfolgt analog, wobei ggf. statt des Tränkens ein Beschichten mit dem Harz vorgesehen ist. Zur Aufbringung eines Drucks auf die Seitenwände beim Fügeprozeß können die Hohlformelemente einer Schubkraft oder einem Druck ausgesetzt werden. Die Seitenwände der Hohlformelemente können eine Substruktur, wie zum Beispiel eine Substruktur der Außenseiten aufweisen.

Bei der Herstellung eines gekrümmten Bauelements können die folgenden Verfahren einzeln oder in Kombination angewendet werden. Erstens kann die Flexibilität der Hohlformelemente im noch ungehärteten oder teilweise gehärteten Zustand ausgenutzt werden, um die zusammengesetzten Abstandsformteile entsprechend der gewünschten Bauelementform zu krümmen. Die Verbindung und Aushärtung des Bauelements folgt dann unter Ausübung der äußeren Druckkraft mit der Druckeinrichtung. Die Stempelwerkzeuge der Druckeinrichtung sind entsprechend der gewünschten Form des Bauelements gekrümmt. In Abhängigkeit von der lokalen Krümmung werden die Hohlformelemente verschieden stark deformiert. Gemäß einer zweiten Möglichkeit werden gekrümmte Stempelwerkzeuge mit Vorsprüngen verwendet, die in die Hohlformelemente eingreifen. Vorteilhafterweise wird damit eine regellose Deformation der Hohlformelemente vermieden und das Anpressen der Seitenwände bzw. Deckflächen und Basisflächen der beiden komplementär ineinander gesetzten Abstandsformteile gewährleistet. Drittens können die Abstandsformteile Hohlformelemente mit Größengradienten aufweisen, welche im zusammengesetzten Zustand mit sich berührenden Seitenwänden der Hohlformelemente zwangsläufig eine gekrümmte Form des Bauelements ergeben.

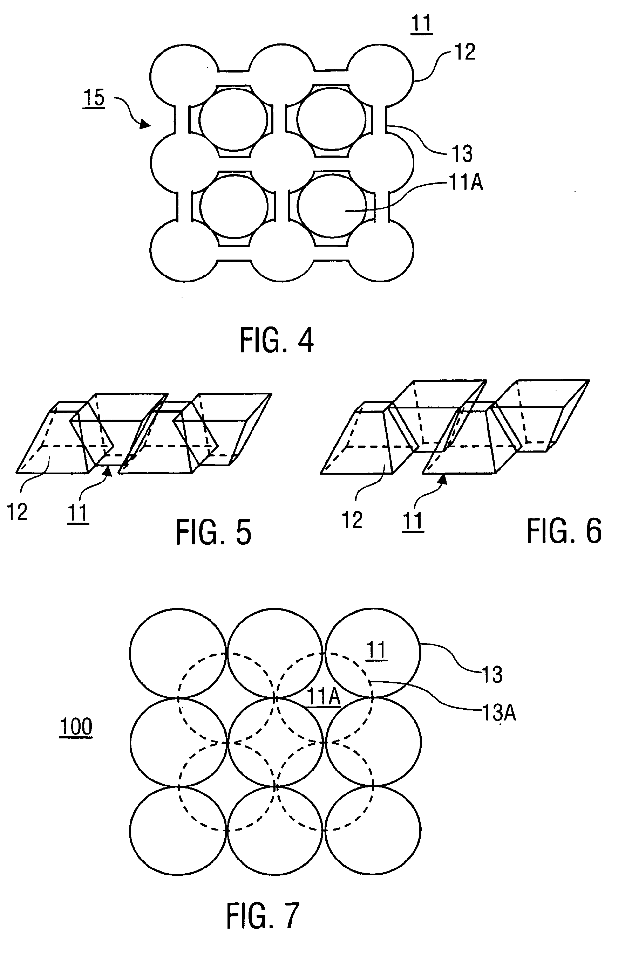

In Figur 4 ist eine abgewandelte Ausführungsform eines erfindungsgemäßen Bauelements in schematischer Draufsicht illustriert, bei der zylinderförmige Hohlformelemente 11 vorgesehen sind. Des Weiteren sind die Basisschichten (z. B. 13) im Unterschied zu der Ausführungsform gemäß Figur 1 keine geschlossenen Gebilde, sondern unterbrochen. Die Hohlformelemente 11 sind an ihren Fußenden über streifenförmige Stege miteinander verbunden, so dass der laterale Verbund der Basisschicht 13 gebildet wird. Die Hohlformelemente 11A, die nicht zum Abstandsformteil 15 gehören, sind in den Lücken zwischen den Hohlformelementen 11 des Abstandsformteils 15 angeordnet und auch zu einem oder bereichsweise zu mehreren Abstandsformteilen verbunden.

Erfindungsgemäß kann vorgesehen sein, dass die Stege der Basisschicht nach der Formgebung des Abstandsformteils durch ein Herausstanzen nicht benötigter Bereiche gebildet werden, so dass der Gesamtaufbau vorteilhafterweise leichter wird.

Die Figuren 5 und 6 illustrieren beispielhaft die Anordnung von pyramidenstumpfförmigen Hohlformelementen 11 (aus Klarheitsgründen ohne die Basisschichten), die abwechselnd mit entgegengesetzten Orientierungen in geraden Reihen (Figur 5) oder gegenseitig versetzt (Figur 6) angeordnet sind. In diesem Fall sind die Kontaktzonen zwischen den Hohlformelementen 11 durch die Überlappungsbereiche der sich berührenden Pyramiden-Seitenwände 12 gegeben.

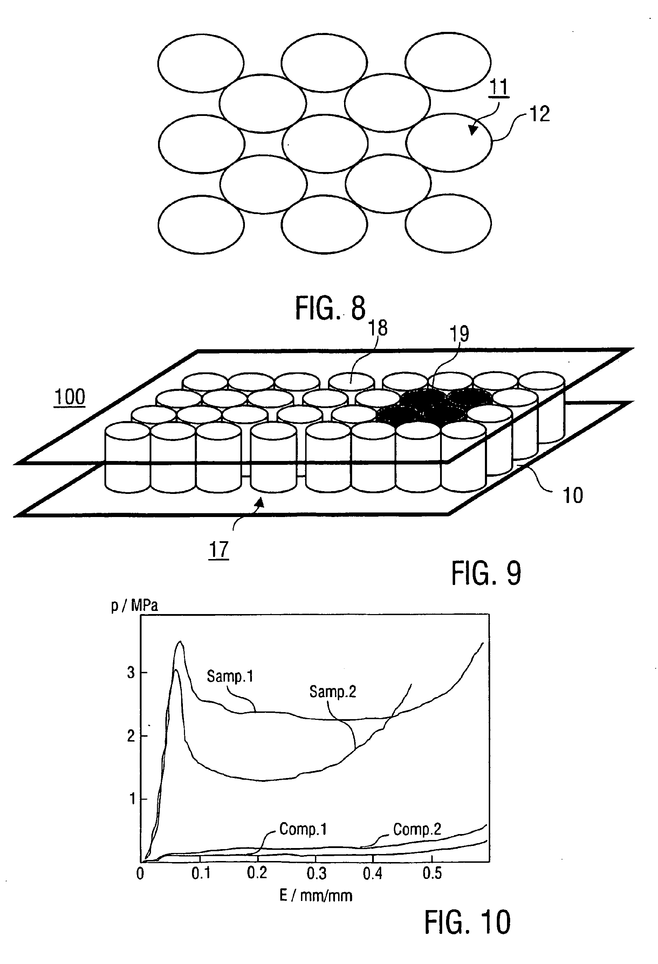

Die Figuren 7 und 8 zeigen in schematischer Draufsicht Anordnungen verschieden geformter Hohlformelemente 11, 11A (ohne die Basisschichten). Die zweidimensionale Ausdehnung des Bauelements erstreckt sich parallel zur Zeichenebene. Gemäß Figur 7 sind analog zu den Figuren 1 und 2 die entgegengesetzt orientierten, sich verjüngenden Hohlformelemente 11, 11A versetzt so angeordnet, dass die kleineren Stirnenden (nicht dargestellt) in die Lücken zwischen den größeren Fußenden der jeweils umgekehrt orientierten Hohlformelemente passen. Die relativ zur Ausdehnung des Bauteils senkrechten Projektionen der Hohlformelemente überlappen sich gegenseitig. Bilden die Seitenwände 12 der Hohlformelemente 11 hingegen gerade, z. B. elliptische Zylinder, so ergibt sich die in Figur 8 gezeigte Variante.

Die vorteilhafte Variabilität erfindungsgemäßer Bauelemente bei der Schaffung von vorbestimmten Deformationseigenschaften ist beispielhaft in Figur 9 gezeigt. Es kann beispielsweise ein Deformationsbereich 17 vorgesehen sein, in dem eine verminderte Steifigkeit durch eine Unterbrechung des Verbundes mit voneinander beabstandeten Hohlformelemente 18 eingestellt wird. Des Weiteren ist ein Füllbereich 19 illustriert, der durch ein Ausfüllen der Hohlformelemente 11 mit einem Kunststoff-Füllmaterial hergestellt worden ist.

Durch die Schaffung von Deformationsbereichen 17 kann ein Bauelement mit einer Partialversteifung erreicht werden, wobei nur Teilbereiche erfindungsgemäß mit verbundenen Hohlformelementen ausgestattet sind, während andere Teile der Stapel-Konstruktion einzeln stehende, beabstandete Hohlformelemente aufweisen. Damit wird z. B. erreicht, dass Teile des Bauelements steif und dimensionsstabil sind (z.B. die flachen Teile einer Stapel-Konstruktion) und andere Bereiche für den Einbau oder für Verkleidungszwecke leicht gekrümmt werden können.

Die Ergebnisse von Belastungsexperimenten an erfindungsgemäßen Bauelementen und Vergleichsmaterialien sind in den Spannungs-Dehnungs-Kurven der Figur 10 illustriert. Als erfindungsgemäße Bauelemente (Samp.1, Samp. 2) wurden Ausführungsformen gemäß Figur 1 mit Deckschichten verwendet. Als Vergleichsmaterialien wurden Stapel aus Deckschichten und einem einzelnen Flächengebilde (Comp.1) oder aus Deckschichten und zwei Flächengebilden verwendet, deren Seitenflächen jedoch nicht verbunden waren (Comp.2). Der Druckversuch der Belastungsexperimente ist in einer Prüfmaschine zwischen parallelen Druckplatten durchgeführt worden.

Die Spannungs-Dehnungs-Kurven illustrieren die Spannungs-Dehnungs-Abhängigkeit und zeigen für die erfindungsgemäßen Bauelemente eine drastische Veränderung des Spannungs-Dehnungs-Verhältnis. Neben einer Erhöhung der Steifigkeit, d.h. des Anstiegs der Kurve im linearen Anfangsbereich wurde überraschenderweise auch ein ausgeprägtes Maximum der Spannungs-Dehnungs-Kurve festgestellt, das bei homogenen Festkörpern einem Fließpunkt entsprechen würde. Dieses Verhalten entspricht vorteilhafterweise gerade dem Spannungs-DehnungsVerhalten des herkömmlichen Honigwaben-Kernschichtmaterials. Die Einfach-Schicht Comp.1 zeichnet sich durch eine nach Erreichen des Maximums der Spannungs-Dehnungs-Kurve weiterhin leicht ansteigende Kurve aus. Dieses Merkmal ist jedoch für den Einsatz des erfindungsgemäßen Bauelements als Kernwerkstoff nicht erforderlich, da in Anwendungen wie z. B. Flugzeug-Innenverkleidungen oder -Kofferablagen das Material ohnehin nur bis zu einem Wert unterhalb des Maximums belastet werden soll. Wichtiger ist es jedoch, ein möglichst hohes Maximum zu erreichen, wie dies für die Proben Samp.1 und Samp.2 gezeigt ist.

Neben der qualitativen Verbesserung der Form der Spannungs-Dehnungs-Kurve wurden auch hervorragende absolute Messergebnisse gefunden. Die Druckfestigkeit der erfindungsgemäßen Bauelemente erhöht sich durch die Verklebung der Seitenflächen im Vergleich zu den Strukturen Comp.1 und Comp.2 auf das 3 bis 5-fache. Die Drucksteifigkeit im Druckmodus (im Wesentlichen die Drucksteifigkeit) wurde auf das 2 bis 3-fache erhöht. Entsprechende Verbesserungen wurden auch bei der Ermittlung der spezifischen, auf die Masse bezogenen Werte der Druckfestigkeit und des Elastizitätsmoduls gefunden.

Die Figuren 11 bis 13 illustrieren die erfindungsgemäße Verwendung einer Druckeinrichtung mit strukturierten Stempelwerkzeugen zur Herstellung des erfindungsgemäßen Bauelements. Die Druckeinrichtung 200 umfasst zwei Stempelwerkzeuge 210, 220 jeweils mit Vorsprüngen 211, 221. Die Vorsprünge 211, 221 weisen die Form und Anordnung der Hohlformelemente 11 (z. B. gemäß Figur 1 oder 3) auf. Figur 11 zeigt einen Ausschnitt eines Stempelwerkzeugs 210 mit einem aufgesetzten Abstandsformteil 13, dessen Seitenwände und Deckflächen von den Vorsprüngen 211 von innen unterstützt werden. Aus Klarheitsgründen sind das Abstandsformteil 13 und das Stempelwerkzeug 210 mit einem Abstand zeigt. Figur 12 illustriert die gegenseitige Anordnung der Stempelwerkzeuge 210, 220 (ohne die Abstandsformteile) bei der Zusammensetzung des erfindungsgemäßen Bauelements. Die relativ zueinander versetzt angeordneten Stempelwerkzeuge werden in Pfeilrichtung ineinander geschoben, bis sich die Abstandsformteile entlang der Seitenwände und Deck- und Basisflächen berühren. Anschließend folgt z.B. die Verklebung, wie dies oben beschrieben wurde. Figur 13 zeigt eine Photographie der Stempelwerkzeuge 210 mit den Vorsprüngen 211, 221 und den aufgesetzten Abstandsformteilen 13.

Gemäß einer ersten Variante können die Stempelwerkzeuge 210, 220 aus einem starren, harten Material gebildet sein. Die Form der Vorsprünge 211, 221 entspricht genau der Form der Hohlformelemente. Die Vorsprünge 211, 221 bestehen beispielsweise aus Metall oder Kunststoff, wie z. B. PTFE.

Gemäß einer zweiten Variante bestehen die Stempelwerkzeuge mit den Vorsprüngen aus einem weichen Material, wie z. B. Kautschuk, insbesondere Silikonkautschuk. Vorteilhafterweise können die Stempelwerkzeuge in diesem Fall mit an sich bekannten Verfahren gegossen werden. Es kann ein Lochblech vorgesehen sein, welches die Stabilität und Ausrichtung der Vorsprünge der Stempelwerkzeuge verbessert.

Die Verwendung von Stempelwerkzeugen aus einem weichen, deformierbaren Material hat den Vorteil, dass bei der Ausübung einer Druckkraft auf die ineinandergreifenden Abstandsformteile alle möglicherweise lokal vorhandenen Hohlräume gefüllt und die benachbarten Hohlformelemente maximal aneinandergedrückt werden. Die Hohlformelemente können lokal deformiert werden, so dass es zu einer flächigen Berührung und Verbindung zwischen den Seitenwänden und Deck- und Basisflächen kommt.

Die in der vorstehenden Beschreibung, den Ansprüchen und den Zeichnungen offenbarten Merkmale der Erfindung können sowohl einzeln als auch in Kombination für die Verwirklichung der Erfindung in ihren verschiedenen Ausgestaltungen von Bedeutung sein.

**Patentansprüche**

1. Bauelement (100), insbesondere für den Leichtbau, mit

    - einer flächigen Ausdehnung, und
    - einer Vielzahl von zueinander benachbart angeordneten Hohlformelementen (11, 11A), die sich quer zu der flächigen Ausdehnung des Bauelements erstrecken, wobei
    - die Hohlformelemente (11, 11A) jeweils eine durchgehend umlaufende Seitenwand (12) aufweisen und die zueinander benachbarten Hohlformelemente an ihren Seitenwänden miteinander verbunden sind, wobei
    - zwei Abstandsformteile (15, 16) vorgesehen sind, die sich parallel zur flächigen Ausdehnung des Bauelements erstrecken und Anordnungen der Hohlformelemente (11, 11A) bilden, wobei jedes der Abstandsformteile (15, 16) eine Basisschicht (13, 14) aufweist, auf der die zu dem Abstandsformteil (15, 16) gehörenden Hohlformelemente (11, 11A) mit gegenseitigen Abständen angeordnet sind, und
    - die Abstandsformteile (15, 16) mit zueinander entgegengesetzter Orientierung angeordnet sind, so dass die Hohlformelemente (11, 11A) des ersten Abstandsformteils (15) in die Abstände zwischen den Hohlformelementen (11, 11A) des zweiten Abstandsformteils (15) ragen und die sich an ihren Seitenwänden gegenseitig berührenden Hohlformelemente (11, 11A) jeweils zu einem anderen der beiden Abstandsformteile (15, 16) gehören,
    **dadurch gekennzeichnet, dass**
    - die ineinander greifenden Abstandsformteile (15, 16) zueinander komplementär gebildet sind.

2. Bauelement nach Anspruch 1, bei dem die Hohlformelemente (11, 11A) an den sich berührenden Seitenwänden (12) miteinander formschlüssig, kraftschlüssig oder stoffschlüssig verbunden sind.

3. Bauelement nach Anspruch 2, bei dem die Hohlformelemente (11, 11A) an den sich berührenden Seitenwänden (12) miteinander verklebt, verschweißt, verlötet, verklammert, durch Vorsprünge verankert, oder verklemmt sind.

4. Bauelement nach mindestens einem der vorhergehenden Ansprüche, bei dem die Hohlformelemente (11, 11A) aus wenigstens einem Material der Gruppe von Materialien gebildet sind, die textile Fasermaterialien, vollflächige Fasermaterialien und Folien umfasst.

5. Bauelement nach Anspruch 4, bei dem die Hohlformelemente (11, 11A) aus wenigstens einem Material der Gruppe von Materialien gebildet sind, die tiefgezogene Gestricke oder Gewirke, Papiere, Vliese, metallische Folien, keramische Folien, thermoplastische und duroplastische Folien umfasst.

6. Bauelement nach mindestens einem der vorhergehenden Ansprüche, bei dem die Seitenwände der Hohlformelemente (11, 11A) ein Bindemittel enthalten und/oder eine Substruktur aufweisen.

7. Bauelement nach Anspruch 1, bei dem die ineinander greifenden Abstandsformteile (15, 16) mit gleichen Größen und Formen der Hohlformelemente (11, 11A) und der Abstände der jeweils zu einem der Abstandsformteile (15, 16) gehörenden Hohlformelemente (11, 11A) gebildet sind.

8. Bauelement nach Anspruch 7, bei dem Deckflächen (11.2) der Hohlformelemente (11A) von einem der Abstandsformteile (15) Basisflächen (11.1) in Abständen zwischen Hohlformelementen (11) des jeweils anderen Abstandsformteils (16) berühren.

9. Bauelement nach mindestens einem der vorhergehenden Ansprüche, bei dem die Hohlformelemente (11, 11A) durch geneigte Seitenwände jeweils eine Verjüngung aufweisen, wobei die Verjüngungen der benachbarten, mit ihren Seitenwänden gegenseitig verbundenen Hohlformelemente (11, 11A) zueinander entgegengesetzt orientiert sind.

10. Bauelement nach mindestens einem der vorhergehenden Ansprüche, bei dem die Seitenwände der Hohlformelemente eben oder konkav gewölbt sind.

**11.** Bauelement nach mindestens einem der vorhergehenden Ansprüche, bei dem die Hohlformelemente (11, 11A) aus wenigstens einer Form aus der Gruppe von Formen gebildet sind, die Quader, Zylinder, Kugeln, Halbkugeln, Halbkugelsegmente, Kegel, und Kegelstümpfe umfasst.

**12.** Bauelement nach Anspruch 11, bei dem die Hohlformelemente (11, 11A) Deformationen durch gegenseitiges lokales Aneinanderdrücken benachbarter Hohlformelemente aufweisen.

**13.** Bauelement nach mindestens einem der vorhergehenden Ansprüche, bei dem die Hohlformelemente (11, 11A) ein rechteckiges oder hexagonales Gitter oder ein Liniengitter bilden.

**14.** Bauelement nach mindestens einem der vorhergehenden Ansprüche, das mindestens einen Deformationsbereich (17) aufweist, in dem die Hohlformelemente (11, 11A) mit einer im Vergleich zur Umgebung verminderten Flächendichte angeordnet sind.

**15.** Bauelement nach mindestens einem der vorhergehenden Ansprüche, das mindestens einen Füllbereich (19) aufweist, in dem eine Kernfüllmasse angeordnet ist.

**16.** Bauelement nach mindestens einem der vorhergehenden Ansprüche, das auf wenigstens einer Seite entlang seiner Ausdehnung eine Deckschicht (21, 22) aufweist.

**17.** Bauelement nach Anspruch 16, bei dem die Deckschicht (21, 22) aus Kunststoff, Metall oder einem Verbundwerkstoff gebildet ist.

**18.** Bauelement nach Anspruch 16 oder 17, das mindestens einen Deformationsbereich (17) aufweist, in dem auf der Deckschicht (21, 22) voneinander beabstandete Hohlformelemente (18) angeordnet sind.

**19.** Bauelement nach mindestens einem der vorhergehenden Ansprüche, bei dem die zwei Abstandsformteile (15, 16) relativ zueinander versetzt angeordnet sind, so dass ein Teilbereich des ersten Abstandsformteils (15, 16) über einen Rand des zweiten Abstandsformteils hinausragt, wobei mindestens ein weiteres Abstandsformteil mit dem hervorragenden Teilbereich des zweiten Abstandsformteils verbunden ist.

**20.** Verfahren zur Herstellung eines Bauelements (100) nach mindestens einem der vorhergehenden Ansprüche, mit den Schritten:

- Anordnung der Abstandsformteile (15, 16) mit zueinander entgegengesetzter Orientierung, so dass die Hohlformelemente (11, 11A) des einen Abstandsformteils (15) in die Abstände zwischen den Hohlformelementen (11, 11A) des anderen Abstandsformteils (15) und umgekehrt ragen und sich die Seitenwände zueinander benachbarter Hohlformelemente (11, 11A) gegenseitig berühren, und
- Verbindung der sich berührenden Abstandsformteile (15, 16).

**21.** Verfahren nach Anspruch 20, bei dem die Hohlformelemente durch Extrusion oder Spitzguss oder durch Tiefziehen der Abstandsformteile hergestellt werden.

**22.** Verfahren nach Anspruch 21, bei dem die Anordnung der Hohlformelemente ein Zusammenstecken der Abstandsformteile umfasst.

**23.** Verfahren nach mindestens einem der Ansprüche 20 bis 22, bei dem die Verbindung der Abstandsformteile (15, 16) ein Verkleben, Verschweißen, Verlöten, Verklammern, Verankern, oder Verklemmen umfasst.

**24.** Verfahren nach mindestens einem der Ansprüche 20 bis 23, bei dem während der Verbindung der Abstandsformteile (15, 16) diese unter der Wirkung einer Druckkraft zusammengepresst werden.

**25.** Verfahren nach Anspruch 24, bei dem die Druckkraft mit Stempelwerkzeugen (210, 220) ausgeübt wird, die Vorsprünge (211, 221) mit einer Form entsprechend einer Innenform der Hohlformelemente (11, 11A) aufweisen.

**26.** Verfahren nach Anspruch 25, bei dem die Druckkraft mit Stempelwerkzeugen (210, 220) ausgeübt wird, die aus Elastomeren gebildet sind.

27. Verfahren nach mindestens einem der Ansprüche 20 bis 26, bei dem das Bauelement mindestens einseitig mit einer Deckschicht (21, 22) verbunden wird.

28. Verwendung eines Bauelements nach mindestens einem der Ansprüche 1 bis 19, als:

- Schutzschicht, insbesondere an Straßenbauwerken oder an Kraftfahrzeugen zum Fußgängerschutz oder zum Insassenschutz,
- Wandbauteil,
- als Verkleidungselement im Flugzeugbau, und/oder
- Kernwerkstoff in einem Leichtbau-Konstruktionsteil.

**Claims**

1. Structural element (100), in particular for lightweight construction, with • a plane extent, and

   • a plurality of adjacently arranged hollow shaped elements (11, 11A), which extend transversely to the plane extent of the structural element, wherein
   • the hollow shaped elements (11, 11A) respectively have a continuous circumferential side wall (12) and the adjacent hollow shaped elements are connected to one another at their side walls, wherein
   • two moulded spacer parts (15, 16) are provided, which extend parallel to the plane extent of the structural element and form arrangements of the hollow shaped elements (11, 11A), wherein each of the moulded spacer parts (15, 16) has a base layer (13, 14), on which the hollow shaped elements (11, 11 A) belonging to the moulded spacer part (15, 16) are spaced from one another, and
   • the moulded spacer parts (15, 16) are arranged to be oriented opposite one another, so that the hollow shaped elements (11, 11 A) of the first moulded spacer part (15) project into the spaces between the hollow shaped elements (11,11A) of the second moulded spacer part (15) and the hollow shaped elements (11, 11A) touching one another at their side walls respectively belong to another of the two moulded spacer parts (15, 16),
   **characterised in that**
   • the interlocking moulded spacer parts (15, 16) are complementary in form.

2. Structural element according to claim 1, in which the hollow shaped elements (11, 11 A) are connected to one another at the touching side walls (12) in a positive, non-positive or integral manner.

3. Structural element according to claim 2, in which the hollow shaped elements (11, 11 A) are glued, welded, soldered, clipped or clamped together, or anchored to one another by projections.

4. Structural element according to at least one of the preceding claims, in which the hollow shaped elements (11, 11A) are formed from at least one material of the group of materials comprising textile fibre materials, full-surface fibre materials and films.

5. Structural element according to claim 4, in which the hollow shaped elements (11, 11A) are formed from at least one material of the group of materials comprising mouldable knitted or warp-knitting fabrics, papers, nonwovens, metal foils, ceramic foils, thermoplastic and thermosetting films.

6. Structural element according to at least one of the preceding claims, in which the side walls of the hollow shaped elements (11, 11A) contain a binding agent and/or have a substructure.

7. Structural element according to claim 1, in which the interlocking moulded spacer parts (15, 16) are formed with the same sizes and shapes of the hollow shaped elements (11, 11A) and of the spacings between the hollow shaped elements (11, 11A) respectively belonging to the moulded spacer parts (15, 16).

8. Structural element according to claim 7, in which cover surfaces (11.2) of the hollow shaped elements (11A) of one of the moulded spacer parts (15) touch base surfaces (11.1) in spaces between hollow shaped elements (11) of the respective other moulded spacer part (16).

9. Structural element of at least one of the preceding claims, in which the hollow shaped elements (11, 11A) respectively have a tapered arrangement as a result of inclined side walls, wherein the tapered arrangements of the adjacent hollow shaped elements (11, 11A) connected to one another at their side walls are oriented opposite one another.

10. Structural element according to at least one of the preceding claims, in which the side walls of the hollow shaped elements are plane or concavely curved.

11. Structural element according to at least one of the preceding claims, in which the hollow shaped elements (11, 11A) are formed from at least one shape from the group of shapes comprising cuboids, cylinders, spheres, hemispheres, hemispherical segments, cones and truncated cones.

12. Structural element according to claim 11, in which the hollow shaped elements (11, 11A) have deformations as a result of adjacent hollow shaped elements being pressed locally against one another.

13. Structural element according to at least one of the preceding claims, in which the hollow shaped elements (11, 11A) form a rectangular or hexagonal grating or a lattice.

14. Structural element according to at least one of the preceding claims, which has at least one deformation region (17), in which the hollow shaped elements (11, 11A) are arranged with a reduced surface density compared to the surrounding area.

15. Structural element according to at least one of the preceding claims, which has at least one filling region (19), in which a core filling material is arranged.

16. Structural element according to at least one of the preceding claims, which has a covering layer (21, 22) on at least one side along its extent.

17. Structural element according to claim 16, in which the covering layer (21, 22) is formed from plastic, metal or a composite material.

18. Structural element according to claim 16 or 17, which has at least one deformation region (17), in which hollow shaped elements (18) spaced from one another on the covering layer (21, 22) are arranged.

19. Structural element according to at least one of the preceding claims, in which the two moulded spacer parts (15, 16) are arranged displaced relative to one another, so that a sub-section of the first moulded spacer part (15, 16) projects beyond an edge of the second moulded spacer part, wherein at least one further moulded spacer part is connected to the projecting sub-section of the second moulded spacer part.

20. Method for producing a structural element (100) according to at least one of the preceding claims, with the steps:

   • arranging the moulded spacer parts (15, 16) to be oriented opposite one another, so that the hollow shaped elements (11, 11A) of one moulded spacer element (15) project into the spaces between the hollow shaped elements (11, 11A) of the other moulded spacer part (15) and vice versa and the side walls of adjacent hollow shaped elements (11, 11A) touch one another, and
   • connecting the touching moulded spacer parts (15, 16).

21. Method according to claim 20, in which the hollow shaped elements are produced by extrusion or injection moulding or by deep-drawing of the moulded spacer parts.

22. Method according to claim 21, in which the arrangement of the hollow shaped elements comprises plugging the moulded spacer parts together.

23. Method according to at least one of claims 20 to 22, in which the connection of the moulded spacer parts (15, 16) comprises gluing, welding, soldering, clipping, anchoring or clamping.

24. Method according to at least one of claims 20 to 23, in which during connection of the moulded spacer parts (15, 16) these are pressed together under the action of a pressing force.

25. Method according to claim 24, in which the pressing force is exerted by stamping tools (210, 220), which have projections (211, 221) with a shape corresponding to an internal shape of the hollow shaped elements (11, 11A).

26. Method according to claim 25, in which the pressing force is exerted by stamping tools (210, 211) formed from elastomers.

27. Method according to at least one of claims 20 to 26, in which the structural element is connected on at least one side to a covering layer (21, 22)

28. Use of a structural element according to at least one of claims 1 to 19, as:

    • protective layer, in particular on road constructions or on motor vehicles for pedestrian protection or for passenger protection,
    • wall structural part,
    • as lining element in aircraft construction and/or
    • core material in a lightweight construction part.

**Revendications**

1. Elément de construction (10) notamment pour une construction légère ayant :

    - une extension en surface,
    - un ensemble d'éléments de forme creuse (11,11A) voisins les uns des autres, qui s'étendent transversalement à l'extension en surface de l'élément de construction,
    les éléments de forme creuse (11, 11A) ont chacun une paroi latérale (12) périphérique, continue et les éléments de forme creux, voisins sont reliés les uns aux autres par leur paroi latérale,
    - deux pièces de forme d'écartement (15, 16) qui s'étendent parallèlement à l'extension en surface de l'élément de construction et qui forment des dispositifs pour les éléments de formé creuse (11,11A),

    chacune des pièces de forme d'écartement (15, 16) a une couche de base (13, 14) sur laquelle sont prévus les éléments de forme creuse (11, 11A) faisant partie de la pièce de forme d'écartement (15, 16) avec des écartements réciproques,
    les pièces de forme d'écartement (15, 16) ont une orientation respectivement opposée de façon que les éléments de forme creuse (11, 11A) de la première pièce de forme d'écartement (15) pénètrent dans les intervalles entre les éléments de forme creuse (11, 11A) de la seconde pièce de forme d'écartement (16) et les éléments de forme creuse (11, 11A) qui se touchent réciproquement au niveau des parois latérales, appartiennent respectivement à l'autre des deux pièces de forme d'écartement (15, 16),
    **caractérisé en ce que**
    les pièces de forme d'écartement (15, 16) qui s'interpénètrent, ont des formes respectives complémentaires.

2. Elément de construction selon la revendication 1,
    dont
    les éléments de forme creuse (11, 11A) sont reliés au niveau des parois latérales (12) en contact par une liaison par la forme, une liaison par la force ou une liaison par la matière.

3. Elément de construction selon la revendication 2,
    dont
    au niveau des parois latérales (12) en contact les éléments de forme creuse (11, 11A) sont collés, soudés, brasés, reliés par des pinces, accrochés par des parties en saillie ou bloqués.

4. Elément de construction selon au moins l'une des revendications précédentes,
    dont
    les éléments de forme creuse (11, 11A) sont formés en au moins une matière appartenant au groupe comprenant les matières fibreuses textiles, les matières fibreuses en pleine surface et les films.

5. Elément de construction selon la revendication 4,
    dont
    les éléments de forme creuse (11,11A) sont réalisés dans au moins une matière appartenant au groupe comprenant les tissus ou les tricots ayant subis un emboutissage profond, les papiers, des non-tissés, des films métalliques, des films céramiques, des films thermoplastiques et des films thermodurcissables.

**6.** Elément de construction selon au moins l'une des revendications précédentes,
dont
les parois latérales des éléments de forme creux (11, 11A) contiennent un liant et/ ou ont une infrastructure.

**7.** Elément de construction selon la revendication 1,
dont
les pièces de forme d'écartement (15, 16) qui s'interpénètrent, sont réalisées avec les mêmes dimensions et les mêmes formes des éléments de forme creuse (11, 11A) et les écarts des éléments de forme creuse (11, 11A) appartiennent respectivement à l'une des pièces de forme d'écartement (15, 16).

**8.** Elément de construction selon la revendication 7,
dont
les surfaces de couverture (11.2) des éléments de forme creuse (11A) de l'une des pièces de forme d'écartement (15) touchent les surfaces de base (11.1) dans les intervalles entre les éléments de forme creuse (11) de l'autre pièce de forme d'écartement (16), respective.

**9.** Elément de construction selon au moins l'une des revendications précédentes,
dont
les éléments de forme creuse (11, 11A) ont chacun un rétrécissement par des parois latérales inclinées, et les rétrécissements des éléments de forme creuse (11, 11A) voisins reliés réciproquement par leur paroi latérale, sont orientés respectivement de façon opposée.

**10.** Elément de construction selon au moins l'une des revendications précédentes,
dont
les parois latérales des éléments de forme creuse sont plans ou bombés sur une forme concave.

**11.** Elément de construction selon au moins l'une des revendications précédentes,
dont
les éléments de forme creuse (11, 11A) sont réalisés avec au moins une forme du groupe de formes comprenant les parallélépipèdes, les cylindres, les sphères, les demi-sphères, les segments de demi-sphères, les cônes ou les troncs de cônes.

**12.** Elément de construction selon la revendication 11,
dont
les éléments de forme creuse (11, 11A) ont des déformations résultant des enfoncements locaux réciproques d'éléments de forme creuse, voisins.

**13.** Elément de construction selon au moins l'une des revendications précédentes,
dont
les éléments de forme creuse (11, 11A) constituent un réseau rectangulaire un réseau hexagonal ou un réseau linéaire.

**14.** Elément de construction selon au moins l'une des revendications précédentes,
comportant au moins
une zone de déformation (17) dans laquelle les éléments de forme creuse (11, 11A) ont une densité de surface réduite par rapport à l'environnement.

**15.** Elément de construction selon au moins l'une des revendications précédentes,
comportant au moins
une zone de remplissage (19) recevant une masse de remplissage de noyau.

**16.** Elément de construction selon au moins l'une des revendications précédentes,
comportant
une couche de recouvrement (21, 22) sur au moins un côté suivant son extension.

**17.** Elément de construction selon la revendication 16,
dans lequel
la couche de couverture (21, 22) est en matière plastique, en métal ou en un matériau composite.

**18.** Elément de construction selon les revendications 16 ou 17,
ayant au moins
une zone de déformation (17) portant des éléments de forme creuse (18) écartés les uns des autres, sur la couche de couverture (21, 22).

**19.** Elément de construction selon au moins l'une des revendications précédentes,
dans lequel
les deux pièces de forme d'écartement (15, 16) sont décalées l'une par rapport à l'autre de façon qu'une zone partielle de la première pièce de forme d'écartement (15, 16) dépasse du bord de la seconde pièce de forme d'écartement, et au moins une autre pièce de forme d'écartement est reliée à la zone partielle en saillie de la seconde pièce de forme d'écartement.

**20.** Procédé de fabrication d'un élément de construction (100) selon au moins l'une des revendications précédentes, comprenant les étapes suivantes :

- placement des pièces de forme d'écartement (15, 16) avec une orientation opposée de façon que les éléments de forme creuse (11,11A) de la première pièce de forme d'écartement (15) viennent dans les intervalles entre les éléments de forme creuse (11, 11A) de l'autre pièce de forme d'écartement (16) et inversement et les parois latérales d'éléments de forme creuse (11, 11A) voisins se touchent réciproquement, et
- réalisation des liaisons entre les pièces de forme d'écartement qui se touchent (15, 16).

**21.** Procédé selon la revendication 20,
selon lequel
les éléments de forme creuse sont réalisés par extrusion, par injection ou par emboutissage profond des pièces de forme d'écartement.

**22.** Procédé selon la revendication 21,
selon lequel
la disposition des éléments de forme creuse, consiste à enficher des pièces de forme d'écartement.

**23.** Procédé selon au moins l'une des revendications 20 à 22,
selon lequel
l'opération de liaison des pièces de forme d'écartement (15, 16) comprend le collage, le soudage, le brasage, la réunion par des agrafes, l'ancrage ou le serrage.

**24.** Procédé selon au moins l'une des revendications 20 à 23,
selon lequel
pendant l'opération de liaison, on comprime les pièces de forme d'écartement (15, 16) sous l'action d'une force de pression.

**25.** Procédé selon la revendication 24,
selon lequel
la force de pression est exercée par un outil à poinçon (210, 220) ayant des parties en saillie (211, 221) dont la forme correspond à la forme intérieure des éléments de forme creuse (11,11A).

**26.** Procédé selon la revendication 25,
selon lequel
la force de poussée est exercée par un outil en forme de poinçon (210, 220) réalisé en élastomère.

**27.** Procédé selon au moins l'une des revendications 20 à 26,
selon lequel
l'élément de construction est relié à la couche de couverture (21, 22) au moins d'un côté.

**28.** Application d'un élément de construction selon au moins l'une des revendications 1 à 19, comme :

- couche protectrice notamment sur les constructions routières ou sur les véhicules automobiles pour la protection des piétons ou des passagers,
- partie de cloison,

- élément d'habillage dans la construction aéronautique, et/ou
- matériau de base dans une pièce de construction légère.

FIG. 1

FIG. 2

FIG. 3

FIG. 4

FIG. 5

FIG. 6

FIG. 7

**FIG. 8**

**FIG. 9**

**FIG. 10**

EP 1 831 009 B1

FIG. 11

FIG. 12

FIG. 13

23

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 0058080 A
- WO 0032382 A
- DE 19721370
- EP 411372 A
- EP 512431 A
- EP 158234 A
- EP 250005 A
- EP 409120 A
- EP 725454 A
- US 5683782 A
- US 5032208 A